# EUROPÄISCHE PATENTSCHRIFT

(11) **EP 2 165 380 B1**
(45) Veröffentlichungstag und Bekanntmachung des Hinweises auf die Patenterteilung: **15.11.2017**
(21) Anmeldenummer: 08774701.0
(22) Anmeldetag: 03.07.2008
(51) Int. Cl.: H01M 8/021, H01M 8/0228, H01M 8/086, H01M 8/0213, H01M 8/0221, H01M 8/1018

(54) **BIPOLARPLATTE FÜR EINE BRENNSTOFFZELLE UND BRENNSTOFFZELLEN-STACK**
BIPOLAR PLATE FOR A FUEL CELL AND FUEL CELL STACK
PLAQUE BIPOLAIRE POUR PILES À COMBUSTIBLE ET EMPILEMENT DE PILES À COMBUSTIBLE

(30) Priorität: 09.07.2007 DE 102007032116
(43) Veröffentlichungstag der Anmeldung: 24.03.2010
(73) Patentinhaber: ThyssenKrupp Steel Europe AG, 47166 Duisburg (DE)
(72) Erfinder: WISCHMANN, Stefan, 10437 Berlin (DE); BECKER, Jens-Ulrik, 47058 Duisburg (DE); TAMLER, Horst, Walter, 58453 Witten (DE); WUNDERLICH, Roland, 59192 Bergkamen-Oberaden (DE); STEINHORST, Michael, 45357 Essen (DE); NIKOLOV, Krasimir, 44225 Dortmund (DE); PULS, Stefan, Peter, 44141 Dortmund (DE); SCHUHMACHER, Bernd, 44227 Dortmund (DE); WEIHER, Nicole, 44879 Bochum (DE)
(74) Vertreter: Cohausz & Florack
(86) Internationale Anmeldenummer: PCT/EP2008/058582
(87) Internationale Veröffentlichungsnummer: WO 2009/007299

(56) Entgegenhaltungen:
- WO-A1-03/009408
- DE-A1-102004 056 846
- US-A- 5 624 769
- US-A1- 2004 253 501

## Beschreibung

Die Erfindung betrifft eine Bipolarplatte für eine Brennstoffzelle mit einer aus einem Stahlwerkstoff bestehenden Kernlage, deren den jeweiligen Elektrolyt-Trägern der Brennstoffzelle zugeordneten Oberflächen jeweils mit einer die Kernlage vor Korrosion schützenden Korrosionsschutzlage versehen sind. Darüber hinaus betrifft die Erfindung einen mit einer solchen Bipolarplatte ausgestatteten Brennstoffzellen-Stack.

Eine Brennstoffzelle besteht allgemein aus zwei Elektroden (Anode und Kathode) mit einem dazwischen befindlichen Elektrolyten. Die Anode wird mit einem Brennstoff (z. B. Wasserstoff), die Kathode mit dem Oxidanten (Sauerstoff) versorgt.

Es sind verschiedene Brennstoffzellentypen bekannt, die nach dem in ihnen verwendeten Elektrolyt unterschieden werden. Bei einer Brennstoffzelle des PEM-Typs (PEM = Polymer-Elektrolyt-Membran) besteht der Elektrolyt aus einer dünnen Membran, die zum einen die beiden an der Reaktion beteiligten Stoffe trennt. Zum anderen dient die Membran als Wasserstoffionen-Leiter und gewährt im feuchten Zustand den Durchgang von Protonen von der Anoden- zur Kathodenseite.

Auf beiden Seiten der Membran ist eine Katalysatorschicht aufgebracht, die für die Reaktion der Zelle notwendig ist. An die Katalysatorschicht grenzt üblicherweise zusätzlich jeweils eine Gasdiffusionslage, die einen optimalen Gastransport sicherstellen und die Katalysatorschicht möglichst gleichmäßig mit den benötigten Gasen versorgen soll. Darüber hinaus wird über die Gasdiffusionslagen das Produktwasser abtransportiert. Elektrolyt-Membran, Katalysatorschicht und Gasdiffusionslage von Anode und Kathode bilden zusammen eine kompakte Einheit, die so genannte "Membrane-Electrolyte-Assembly", kurz auch "MEA" genannt.

Die MEA ist typischerweise zwischen zwei so genannten Bipolarplatten angeordnet, von denen bzw. zu denen die Elektronen über den jeweiligen elektrischen Verbraucher wandern. In der Praxis werden viele Brennstoffzellen in Reihe geschaltet zu einem leistungsfähigen "Stack" gestapelt, um die für die jeweilige Anwendung benötigten Spannungen zur Verfügung stellen zu können. Die Bipolarplatten bilden dabei das Verbindungsstück zwischen der Kathode und Anode zweier benachbarter Zellen und sind damit sowohl Plus- als auch Minuspol für jeweils eine der beiden benachbarten Zellen. Eine weitere wichtige Aufgabe der Bipolarplatten in einem Brennstoffzellen-Stack besteht darin, die flächige Gasversorgung der Elektroden und der Membran zu gewährleisten und die Kräfte aufzunehmen, die erforderlich sind, um den Stack zusammenzuhalten.

Auf einer Elektrolyt-Membran basierende PEM-Brennstoffzellen arbeiten im Temperaturbereich von 20 - 120 °C und liefern nach heutigem Stand Leistungen von mehreren hundert Kilowatt.

Höhere Leistungen lassen sich mit Hochtemperatur-Brennstoffzellen erzielen, bei denen als Elektrolyt Phosphorsäure eingesetzt wird und die bei 160 - 220 °C betrieben werden. Solche Hochtemperatur-Brennstoffzellen werden kurz auch als "PAFC" bezeichnet. In PAFC ist die hochkonzentrierte Phosphorsäure (90 -100 %) üblicherweise in einer als Elektrolytträger dienenden Polytetrafluorethylen-Faserstruktur fixiert. Wie alle Brennstoffzellen produziert sie Strom durch die Oxidation eines Brenngases. Als Brenngas dient wie bei der PEM üblicherweise Wasserstoff. Als Oxidationsmittel kann Luft oder reiner Sauerstoff eingesetzt werden.

Sowohl in Brennstoffzellen des PEM-Typs als auch in Brennstoffzellen des "PAFC"-Typs sind die Bipolarplatten einem starken korrosiven Angriff ausgesetzt. Sie müssen daher nicht nur eine hohe elektrische Leitfähigkeit und eine gute Temperaturbeständigkeit besitzen, sondern sie müssen auch aus einem gut formbaren Material bestehen, damit die für die Brennstoffzufuhr und -abfuhr erforderlichen Formelemente, wie Kanäle und Trennwände, auf einfache Weise in sie eingeformt werden können. Gleichzeitig müssen die Bipolarplatten eine hohe mechanische Stabilität bei geringer Dicke besitzen und gasundurchlässig sein, um die Kammern der Brennstoffzelle untereinander und gegenüber der Umgebung sicher abdichten zu können.

In der Vergangenheit sind als Werkstoff für Bipolarplatten Graphit oder Graphitharze verwendet worden. So sind in vorgefertigte Graphitblöcke die für die Gasversorgung erforderlichen Kanäle mechanisch eingefräst oder Graphitpulver ist in entsprechend vorgeformten Formen zu Bipolarplatten verpresst worden, während aus den Graphitharzen im Spritzgussverfahren Bipolarplatten hergestellt worden sind. Der Vorteil der Verwendung von Graphit oder graphithaltigen Harzen bestand dabei darin, dass die aus diesen Werkstoffen hergestellten Bipolarplatten bei einer guten elektrischen Leitfähigkeit eine hohe Korrosionsbeständigkeit aufwiesen. Allerdings ist der mit der Herstellung von Bipolarplatten aus Graphit verbundene Aufwand erheblich und ihr Preis dementsprechend hoch. Darüber hinaus müssen die aus Graphit oder Graphit-Harz gefertigten Bipolarplatten eine vergleichbar hohe Mindestdicke aufweisen, um den auf sie im praktischen Einsatz wirkenden mechanischen Belastungen standhalten zu können.

Sowohl wegen ihres hohen Preises als auch wegen ihrer erforderlichen Mindestdicke und der dadurch bedingten Baulänge von mit ihnen aufgebauten Brennstoffzellen ist man bemüht, in der Praxis die aus graphithaltigen Werkstoffen hergestellten Bipolarplatten zunehmend durch metallische Bipolarplatten zu ersetzen.

Ein Beispiel für eine solche metallische Bipolarplatte ist in der DE 10 2004 056 846 A1 beschrieben. Die bekannte Bipolarplatte weist eine Kernlage auf, die aus Stahl besteht. Auf die Kernlage aus Stahl ist zunächst eine vor Korrosion schützende Schicht vollflächig aufgetragen worden. An den Stellen, an denen die Bipolarplatte mit den angrenzend angeordneten Membran-Elektroden in Kontakt kommt, ist diese Schicht dann abgeschliffen worden, um dort anschließend örtlich begrenzt eine gut leitfähige Beschichtung auftragen zu können. In die so beschichtete Bipolarplatte werden die für den Medientransport benötigten Kanäle in der Weise eingeformt, dass die Seitenwände der Kanäle mit der Korrosionsschutzschicht bedeckt sind, während die zwischen den Kanälen verbleibenden Stege im Bereich ihrer mit der jeweiligen MEA in Kontakt kommenden Stegfläche die gut leitfähige Beschichtung tragen.

Bei der aus der DE 10 2004 056 846 A1 bekannten Bipolarplatte ist im Bereich des stärksten korrosiven Angriffs, also in den Transportkanälen, ein hoher Korrosionsschutz und in dem Bereich, der für die elektrische Kontaktierung wichtig ist, eine gute elektrische Leitfähigkeit gewährleistet. Allerdings muss dazu nicht nur ein relativ kompliziertes, viele Arbeitsschritte umfassendes Herstellverfahren, sondern auch eine extreme Fertigungsgenauigkeit bei der Formgebung der Bipolarplatte gewährleistet sein. Andernfalls kann es insbesondere im ungeschützten Bereich des Übergangs zwischen den Kanälen und den Kontaktflächen zu starker Korrosion kommen, die einen frühzeitigen Ausfall der Brennstoffzelle nach sich ziehen kann.

Eine weitere Bipolarplatte der im Oberbegriff des Anspruchs 1 angegebenen Art ist aus der US 2004/0253501 A1 bekannt. Diese für eine Brennstoffzelle des PEM-Typs bestimmte Bipolarplatte weist eine aus Edelstahl bestehende Kernlage auf, auf die eine aus Gold bestehende Lage aufgebracht ist, wobei zwischen der Goldlage und der Kernlage eine intermetallische Verbindungsschicht ausgebildet ist, durch die die Haftung der Goldlage auf der Kernlage verbessert werden soll. Die so beschaffene Bipolarplatte ist nicht nur teuer in ihrer Herstellung, sondern es besteht auch die Gefahr, dass sie den in der Praxis auftretenden Belastungen nicht ausreichend lange standhält.

Neben dem voranstehend erläuterten Stand der Technik ist aus der US 5,624,769 A eine Bipolarplatte bekannt, die eine mit Titannitrid beschichtete Grundplatte aufweist, welche aus einem Leichtmetallwerkstoff besteht. Bei dem Leichtmetallwerkstoff handelt es sich beispielsweise um einen Al- oder Ti-Werkstoff. Zwischen der Leichtmetall-Grundplatte und der Beschichtung liegt eine passivierende, schützende Schicht, welche aus einem Edelstahl aufgebaut sein kann

In der WO 03/009408 A1 ist schließlich eine Bipolarplatte mit einer Grundplatte offenbart, die ebenfalls bevorzugt aus Aluminium oder seinen Legierungen, Magnesium oder seinen Legierungen, Kupfer oder Titan bestehen kann. Als mögliche Alternative zu den Leichtmetallwerkstoffen für die Grundplatte wird dabei auch Stahl erwähnt. Allerdings wird dieser Werkstoff wegen seines hohen Gewichts nur als bedingt geeignet angesehen.

Vor diesem Hintergrund bestand die Aufgabe der Erfindung darin, eine Bipolarplatte und einen mit einer solchen Bipolarplatte ausgestatten Brennstoffzellen-Stack zu schaffen, die einerseits kostengünstig hergestellt werden können und andererseits bei hoher Effizienz über eine lange Einsatzdauer verwendbar sind.

Diese Aufgabe ist in Bezug auf die Bipolarplatte erfindungsgemäß dadurch gelöst worden, dass eine solche Bipolarplatte gemäß Anspruch 1 ausgebildet ist. Die auf Anspruch 1 rückbezogenen Ansprüche beinhalten unter die Erfindung fallende vorteilhafte Ausgestaltungen einer solchen erfindungsgemäßen Bipolarplatte.

Eine erfindungsgemäße für eine Brennstoffzelle bestimmte Bipolarplatte weist eine aus einem Stahlwerkstoff bestehende Kernlage auf. Ein solcher Stahlwerkstoff ist nicht nur preisgünstig in der Beschaffung, sondern lässt sich auch besonders gut und mit vergleichbar einfachen Mitteln umformen. Darüber hinaus besitzt er eine hohe Festigkeit. Für eine in erfindungsgemäßer Weise beschaffene Bipolarplatte können daher nicht nur problemlos mechanische Eigenschaften gewährleistet werden, die allen im praktischen Einsatz auftretenden mechanischen Belastungen standhalten, sondern eine erfindungsgemäße Bipolarplatte kann auch besonders kostengünstig hergestellt werden.

Die stählerne Kernlage einer erfindungsgemäßen Bipolarplatte ist auf ihren den jeweiligen Elektroden der Brennstoffzelle zugeordneten Oberflächen jeweils mit einer die Kernlage vor Korrosion schützenden Korrosionsschutzlage versehen. Wesentlich ist dabei, dass auch die auf die Kernlage beidseitig aufgetragenen Korrosionsschutzlagen jeweils aus einem Metallwerkstoff bestehen und sich beidseitig jeweils vollflächig über die Kernlage erstrecken. Die Materialwahl und die vollflächige Erstreckung der Korrosionsschutzschicht über die dem korrosiven Angriff des jeweiligen Brennstoffs bzw. des Reaktionsproduktes ausgesetzten Oberflächen der Kernlage unterstützen nicht nur eine besonders einfache Herstellung der erfindungsgemäßen Bipolarplatte, sondern stellen auch sicher, dass die Kernlage insgesamt gegen den Korrosion geschützt und die Gefahr eines lokalen Angriffs im Bereich von Stellen, an denen ein unmittelbarer Korrosionsschutz fehlt, ausgeschlossen ist. So können für den Auftrag der Korrosionsschutzschicht auf die Stahl-Kernlage konventionelle, aus dem Bereich der Fertigung von korrosionsbeständigen Stahlflachprodukten hinlänglich bekannte Verfahren eingesetzt werden, mit denen sich großtechnisch für die Erzeugung der Bipolarplatte geeignete Bleche zu minimierten Stückkosten erzeugen lassen.

Eine besondere Bedeutung kommt darüber hinaus der erfindungsgemäß jeweils auf die Korrosionsschutzlagen aufgebrachten Funktionsschicht zu. Diese Funktionsschicht ist bei einer erfindungsgemäßen Bipolarplatte zumindest im Neuzustand ebenfalls vollflächig über die Korrosionsschutzschicht verteilt. Auch für den Auftrag der Funktionsschicht können somit Verfahren eingesetzt werden, wie sie im Bereich der großtechnischen Produktion von entsprechend beschichtetem Stahlblechmaterial verwendet werden. Die Aufgabe der Funktionsschicht besteht dabei einerseits darin, eine ausreichende elektrische Leitfähigkeit der erfindungsgemäßen Bipolarplatte auch dann zu gewährleisten, wenn die für die Kernlage und die Korrosionsschutzschicht verwendeten Materialien selbst gar nicht elektrisch leitend sind oder nur eine unzureichende Leitfähigkeit besitzen. Die elektrisch leitfähige Funktionsschicht ermöglicht als solche eine weitgehend freie Wahl der für die Kernlage und die Korrosionsschutzschicht verwendeten Werkstoffe. Diese können bei einer erfindungsgemäßen Bipolarplatte im Hinblick auf eine optimierte mechanische Eignung und eine ebenso optimal an die jeweiligen Gegebenheiten angepasste Korrosionsbeständigkeit ausgewählt werden.

Neben der elektrischen Leitfähigkeit besteht eine weitere wichtige Eigenschaft der erfindungsgemäß vorgesehenen Funktionsschicht darin, die Menge der aus der Kernlage oder den Korrosionsschutzlagen in den Brennstoff oder das Reaktionsprodukt gelangenden Metallionen auf ein Minimum zu reduzieren. Indem die erfindungsgemäß auf die Korrosionsschutzschicht aufgetragene Funktionsschicht im Wesentlichen vollständig undurchlässig ist für Metallionen, wird besonders wirkungsvoll eine Vergiftung des jeweils verwendeten Elektrolyten durch aus der Bipolarplatte stammende Teilchen verhindert.

Hinsichtlich des Brennstoffzellen-Stacks ist die voranstehend genannte Aufgabe dadurch gelöst worden, dass mindestens eine der jeweils zwischen zwei Elektrolyt-Trägern angeordneten Bipolarplatten dieses Stacks in erfindungsgemäßer Weise ausgebildet ist.

Erfindungsgemäß beschaffene Bipolarplatten eignen sich aufgrund ihrer besonderen Eigenschaftskombination zum Einsatz in jeder Art von Brennstoffzellen-Stacks, bei denen sie hohen mechanischen und korrosiven Belastungen ausgesetzt sind und bei denen an ihre elektrische Funktion ebenso hohe Anforderungen gestellt werden. Besonders gut lassen sich erfindungsgemäße Bipolarplatten dabei in Brennstoffzellen-Stacks einsetzen, deren Brennstoffzellen zum im niedrigeren Temperaturbereich von 20 - 120 °C betriebenen Typ PEM gehört und bei denen als Elektrolyt-Träger eine protonenleitende Membran eingesetzt wird. Darüber hinaus lassen sich erfindungsgemäße Bipolarplatten auch besonders effektiv in Brennstoffzellen-Stacks verwenden, deren Brennstoffzellen zum bei höheren Temperaturen von 160 - 220 °C betriebenen Typs PAFC gehören und bei denen als Elektrolyt-Träger typischerweise als hochkonzentrierte Phosphorsäure enthaltende Faserstrukturen vorgesehen sind.

Mit der Erfindung stehen somit Bipolarplatten zur Verfügung, die sich kostengünstig auf Basis von in konventioneller Weise herstellbaren Verbundwerkstoffen fertigen lassen. Durch die erfindungsgemäße Kombination von mindestens zwei beidseitig vollflächig auf ein als Kernlage dienendes Stahlblechmaterial aufgetragenen Schichten, von denen die eine eine vor Korrosion schützende Wirkung hat und die andere eine ausreichende elektrische Leitfähigkeit der Bipolarplatte und eine ausreichende Reinheit der mit der Bipolarplatte in Kontakt kommenden Fluide gewährleistet, ist nicht nur ein sicherer Korrosionsschutz und damit einhergehend eine allen Anforderungen genügende Langzeitstabilität bei entsprechend langer Lebensdauer erreicht, sondern auch eine optimale elektrische Funktion sowohl der Bipolarplatte selbst als auch des in der jeweiligen Brennstoffzelle verwendeten Elektrolyten gesichert.

Da als Ausgangsprodukt für die Herstellung erfindungsgemäßer Bipolarplatten ein mit allen erforderlichen Schichten bereits fertig beschichtetes Blech verwendet wird, können erfindungsgemäße Bipolarplatten dabei durch einfache Umform- und Fügeoperationen solcher Bleche geformt werden. Auch dies trägt dazu bei, dass erfindungsgemäße Bipolarplatten zu besonders günstigen Herstellkosten zur Verfügung gestellt werden können.

Als Werkstoff für die Kernlage einer erfindungsgemäßen Bipolarplatte kommt grundsätzlich jeder Stahl in Frage, der eine ausreichende Festigkeit und Verformbarkeit besitzt. Für die Kernlage von Bipolarplatten, die in einer im niedrigen Temperaturbereich betriebenen PEM eingesetzt werden, eignen sich dabei besonders preiswert erhältliche Qualitätsstähle, wie beispielsweise weiche, niedrig legierte Stähle mit einem Kohlenstoffgehalt unter 0,2 Gew.-%.

Soll eine erfindungsgemäße Bipolarplatte bei hohen Temperaturen und besonders aggressiven Medien in einer PAFC verwendet werden, so kann eine besonders lange Lebensdauer der Bipolarplatte dadurch gewährleistet werden, dass die Kernlage aus einem Edelstahl besteht. Edelstahl weist an sich schon eine hohe Korrosionsbeständigkeit auf. Diese Eigenschaft für sich gewährleistet schon besonders hohe Standzeiten, unabhängig davon, ob Edelstahl für die Kernlage einer in einer PEM oder einer PAFC eingesetzten Bipolarplatte verwendet wird.

Der Schutz der Kernlage gegen Korrosion wird erfindungsgemäß dadurch gesichert, dass der Metallwerkstoff mindestens einer der Korrosionsschutzlagen ein Stahlwerkstoff mit einer gegenüber dem Stahlwerkstoff der Kernlage höheren Korrosionsbeständigkeit ist.

Ein besonders guter Schutz gegen Korrosion ergibt sich dabei dann, wenn der Metallwerkstoff mindestens einer der Korrosionsschutzlagen ein Edelstahl, insbesondere ein austenitischer Edelstahl, ist. Der besondere Vorteil der Verwendung eines Stahls oder eines anderen sich bei Verformung vergleichbar verhaltenden metallischen Materials besteht darin, dass sich diese Materialien besonders einfach auf die aus Stahl bestehende Kernlage aufbringen lassen. So kann die Korrosionsschicht beispielsweise durch Walzplattieren, insbesondere Warmwalzplattieren, oder ein vergleichbares Verfahren auf der Kernlage aufgebracht werden.

Während sich die Kernlage mit Titan und Titanlegierungen sowie andere in Block- oder Blechform verarbeitbare und auswalzbare Werkstoffe auf einfache Weise durch das bereits erwähnte Walzplattieren, insbesondere Warmwalzplattieren, beschichten lassen, können andere in dieser Form nicht oder nur unter Schwierigkeiten verarbeitbare Werkstoffe beispielsweise durch PVD-Beschichten aufgebracht werden. Unter "PVD" wird dabei ein Beschichtungsverfahren verstanden, bei dem die jeweiligen Metalle oder chemischen Verbindungen durch Zufuhr thermischer Energie oder durch Teilchenbeschuss im Hochvakuum auf der zu beschichtenden Oberfläche der Kernlage abgeschieden werden. Das Beschichtungsmaterial wird dazu aus einem Feststoff in die Dampfphase überführt und kondensiert anschließend auf der jeweiligen Oberfläche. Zu den PVD-Verfahren zählen auch das Ionenplattieren und Kathodenzerstäubung (Sputtering). Selbstverständlich lassen sich auch Ti und alle edleren Stähle in dieser Weise auf die Kernlage auftragen. Um eine intensive und dauerhaft sichere Verbindung zwischen der Kernlage und dem Beschichtungswerkstoff zu gewährleisten, kann sich dabei dem Beschichtungsvorgang eine thermische Nachbehandlung anschließen, in deren Zuge sich eine Legierungsschicht bildet, die Bestandteile des Stahlwerkstoffs der Kernlage und der Beschichtung enthält.

Als Werkstoff für die Funktionsschichten der erfindungsgemäßen Bipolarplatte eignen sich beispielsweise besonders amorphe C/H-Schichten, wie DLC-(DLC = Diamond Like Carbon) oder GLC-Schichten (GLC = Graphit Like Carbon) oder leitfähige Plasmapolymer-Schichten, wie amorphe Si/C/H- oder Si/H-Schichten.

Alternativ oder ergänzend kann die Funktionsschicht aus einer leitfähigen anorganischen Verbindung gebildet sein. So können als anorganische Verbindung solche verwendet werden, die der Gruppe der Nitride und/oder Carbonitride, Oxide und / oder Oxynitride, insbesondere der Gruppe der metastabilen bzw. nicht-stöchiometrischen Metalloxide, - oxinitride oder -nitride, angehören. Hierzu zu nennen sind beispielsweise die anorganischen Oxide TiO₂, ZrO₂, HfO₂, V₂O₅, Nb₂O₅, Ta₂O₅, CrO₂, MoO₂, WO₃, CoO₂, Co₂O₃, IrO₂, NiO, CuO, InO₂ und SnO₂.

Auch können für die Funktionsschicht der Gruppe "Au, Ni, Pd, Pt, Cu, Ag, Au" angehörende Elemente oder deren Legierungen gewählt werden, die neben einer guten elektrischen Leitfähigkeit eine ebenso gute Barrierewirkung gegen den Durchtritt von Metallionen aus der Kernlage oder der Korrosionsschutzschicht gewährleisten.

Abhängig von den ihr zugedachten Funktionen "elektrische Leitfähigkeit" einerseits und "Barriere gegen das Durchtreten von Metallionen" kann es zweckmäßig sein, die Funktionsschicht selbst mehrschichtig aufzubauen. So kann die Funktionsschicht eine erste direkt auf die Korrosionsschutzschicht aufgetragene Lage eines den Durchtritt von Metallionen besonders wirkungsvoll verhindernden Werkstoffs, wie beispielsweise die voranstehend bereits erwähnten amorphen C/H-Schichten oder Plasmapolymer-Schichten, und eine darauf aufgetragene Lage eines elektrisch besonders gut leitfähigen Materials umfassen, die beispielsweise aus einer der ebenfalls bereits erwähnten, insbesondere der Gruppe der Nitride und / oder Carbonitride, Oxide und / oder Oxynitride angehörenden anorganische Verbindungen und / oder einem der Gruppe "Au, Ni, Pd, Pt, Cu, Ag, Au" oder deren Legierungen angehörenden metallischen Werkstoff gebildet sein kann.

Für das Auftragen der Funktionsschicht auf die Korrosionsschutzschicht eignet sich neben dem PVD-Verfahren auch das CVD-Verfahren. Beim CVD-Verfahren wird ein Gasgemisch in den Reaktionsraum eingeleitet, das durch eine chemische Reaktion bei erhöhter Temperatur den Feststoff bildet und sich unter der katalytischen Wirkung der Substratoberfläche auf dem Grundmaterial niederschlägt. Es existieren bei diesem Verfahren mehrere Varianten, man unterscheidet u. a. zwischen thermischen CVD Prozessen und Plasma-aktiviertem CVD (PA-CVD). Die wichtigsten Reaktionstypen beim erstgenannten Verfahren sind die Chemosynthese, die Pyrolyse und die Disproportionierung. Beim PA-CVD Prozess werden die chemischen Reaktionen durch ein Plasma aktiviert. Neben der Bezeichnung PACVD existiert in der englischen Literatur auch der Begriff PE-CVD (PECVD, plasma enhanced CVD).

Die Dicke der Kernlage, der Korrosionsschutzschichten und der Funktionsschichten wird in Abhängigkeit von der jeweils zugedachten Aufgabe und den Materialien gewählt, aus denen die betreffende Lage bzw. Schicht hergestellt ist. So kann es im Hinblick auf die erforderliche Stabilität und die gewünschte geringe Dicke der Bipolarplatte sinnvoll zu sein, die Dicke der Kernlage im Bereich von 1.000 - 1.000.000 nm festzulegen.

Um eine ausreichende Schutzwirkung der Korrosionsschutzschicht zu gewährleisten, kann deren Mindestdicke mit mindestens 10 nm bis höchstens 100.000 nm veranschlagt werden. Die sehr geringen Schichtdicken lassen sich dabei durch PVD- oder CVD-Beschichten erzielen, während höhere Schichtdicken von 10.000 nm und mehr auf einfache Weise insbesondere durch Warmwalzplattieren erzeugt werden können.

Für die Funktionsschicht sollte dagegen von einer im Bereich von 3 nm, insbesondere 10 nm, bis 10.000 nm liegenden Dicke ausgegangen werden, um auch deren Funktion sicher nutzen zu können. Auch hier gilt, dass sich besonders dünne und trotzdem effektive Funktionsschichten durch PVD- oder CVD-Beschichtung erzielen lassen.

Nachfolgend wird die Erfindung anhand von Ausführungsbeispielen näher erläutert. Es zeigen jeweils schematisch und nicht maßstäblich:
- Fig. 1: einen Brennstoffzellen-Stack in einem Längsschnitt;
- Fig. 2: einen Ausschnitt einer Bipolarplatte mit angrenzenden Polymer-Membran-Elektrolyten in einem Längsschnitt;
- Fig. 3: den Schichtaufbau der Bipolarplatte in einer stark vergrößerten Schnittansicht.

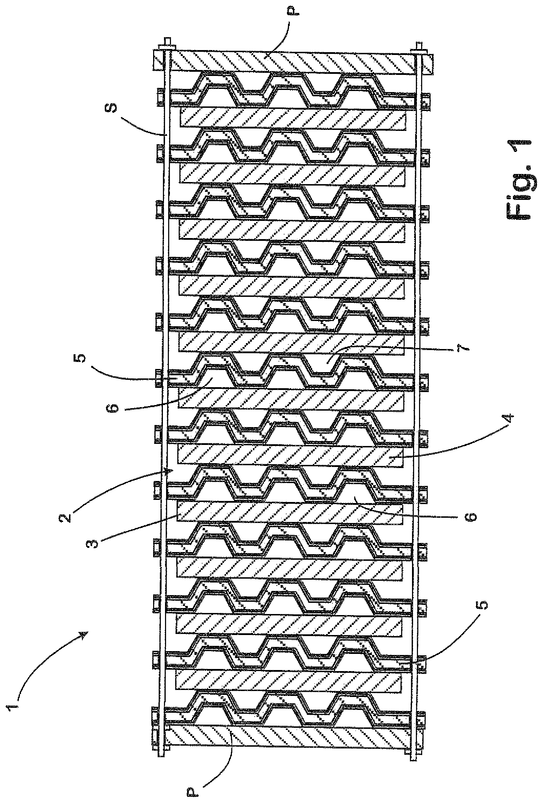

Der in Fig. 1 stark vereinfacht dargestellte Brennstoffzellen-Stack 1 umfasst eine Vielzahl von Brennstoffzellen 2 des PEM-Typs, die als Elektrolytträger jeweils eine hier im einzelnen nicht dargestellte Polymer-Elektrolyt-Membran ("PEM") umfassen. Auf die PEM ist beidseits jeweils vollflächig eine hier ebenfalls nicht gezeigte Katalysatorschicht und darauf jeweils eine hier nicht im Einzelnen auch sichtbare Gasdiffusionslage aufgetragen. Die PEM bildet mit den Katalysatorschichten und den Gasdiffusionslagen jeweils eine Membran-Elektroden-Anordnung "MEA" 3,4.

Jede der der MEA's 3,4 ist mittels sich über die gesamte Länge des Brennstoffzellen-Stacks 1 erstreckender und gegen endseitig angeordnete Platten P abstützende Spannschrauben S jeweils zwischen einer Bipolarplatte 5 eingespannt. In die Bipolarplatten 5 sind dabei wechselweise von der einen und der anderen Seite her Kanäle 6,7 eingeformt. Die der ersten Seite der Bipolarplatten 5 zugeordneten Kanäle 6 sind dabei mit einer hier nicht gezeigten Brennstoffzuführung verbunden, über die der in den Brennstoffzellen 2 verbrannte Wasserstoff in die Kanäle 6 gelangt. Demgegenüber führen die der anderen Seite der Bipolarplatten 5 zugeordneten Kanäle 7 Luft oder reinen Sauerstoff sowie das als Reaktionsprodukt anfallende Wasser.

Mit den jeweils zwischen den Kanälen 6,7 einer Seite verbleibenden unverformten Oberflächenabschnitten 8,9 liegen die Bipolarplatten 5 an der ihrer jeweiligen Seite zugeordneten MEA 3,4 in elektrisch leitendem Kontakt an.

Die so gebildeten einzelnen Brennstoffzellen 2 des Brennstoffzellen-Stacks 1 sind in an sich bekannter, hier aus Gründen der Übersichtlichkeit nicht dargestellter Weise in Reihe geschaltet, so dass sie eine für die Versorgung eines nicht gezeigten elektrischen Verbrauchers ausreichende Leistung abgeben.

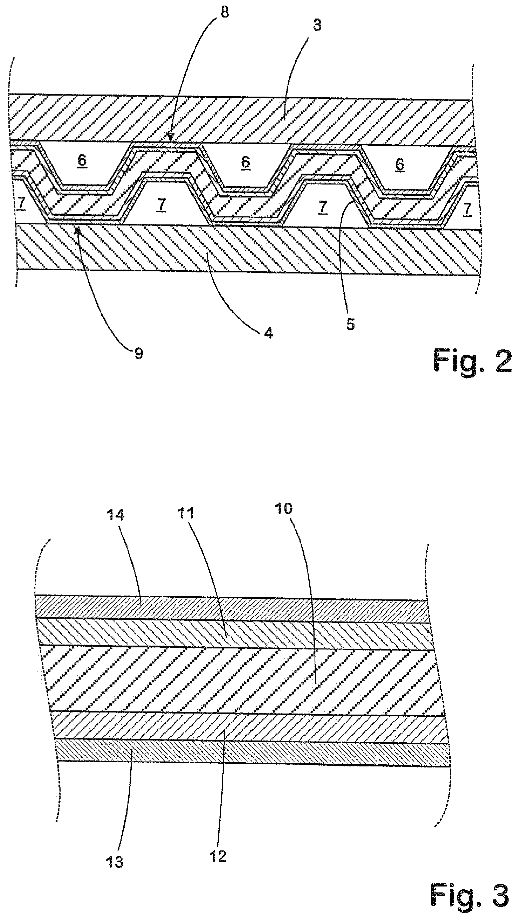

Wie besonders deutlich anhand des in Fig. 3 dargestellten Ausschnitts erkennbar, weisen die Bipolarplatten 5 jeweils eine Kernlage 10 auf, auf deren den MEA's 3,4 zugeordneten Oberflächen jeweils vollflächig eine Korrosionsschutzschicht 11,12 aufgetragen ist. Die Korrosionsschutzschichten 11,12 wiederum sind von jeweils einer Funktionsschicht 13,14 vollflächig abgedeckt.

Der Aufbau eines Brennstoffzellen-Stacks, dessen Brennstoffzellen vom PAFC-Typ sind, ist prinzipiell gleich dem voranstehend erläuterten, wobei an die Stelle der MEA's als Elektrolyt-Träger hier nicht dargestellte Fasergitter treten, in denen die hochkonzentrierte (90 - 100 %) Phosphorsäure gespeichert ist.

Gemäß einem ersten besonders für den Einsatz in einer Hochtemperatur-PAFC (max. Temperatur: 160 °C) geeigneten Ausführungsbeispiel besteht die Kernlage 10 der Bipolarplatten 5 jeweils aus einem niedrig legierten handelsüblichen Edelstahl. Ein für diesen Zweck in Frage kommender Edelstahl wird in der derzeit geltenden StahlEisen-Liste unter der Werkstoffnummer 1.4000 geführt. Ebenso können beispielsweise die Stähle mit den Werkstoffnummern 1.4301, 1.4306 und 1.4401 oder anders zusammengesetzte Edelstähle mit vergleichbaren Eigenschaften verwendet werden. Die durch Walzplattieren auf die Kernlage 10 aufgebrachten Korrosionsschutzschichten 11,12 bestehen dagegen bei diesem Beispiel aus einem höher korrosionsbeständigen handelsüblichen Edelstahl, wie beispielsweise aus einem der unter den Werkstoffnummern 1.4539, 1.4465 oder 1.45655 geführten Stähle.

Alternativ können die Korrosionsschutzschichten 11,12 auch durch PVD-Bedampfung von Ta auf den jeweiligen Oberflächen der Kernlage 10 gebildet sein. Unabhängig davon, wie die Korrosionsschutzschichten 11,12 erzeugt worden sind, ist auf sie durch PVD-Beschichten jeweils eine der aus Au bestehenden Funktionsschichten 13,14 abgeschieden worden.

Bei einem zweiten besonders für den Einsatz in einer Brennstoffzelle des PEM-Typs (max. Temperatur: 80 °C) geeigneten Ausführungsbeispiel besteht die Kernlage 10 der Bipolarplatten 5 jeweils aus einem weichen und gut verformbaren, 0,06 Gew.-% C enthaltenden Qualitätsstahl. Die durch Walzplattieren auf die Kernlage 10 aufgebrachten Korrosionsschutzschichten 11,12 bestehen dagegen bei diesem Beispiel aus einem Edelstahl, der korrosionsbeständiger ist als der Werkstoff der Kernlage 10. Auf die Korrosionsschutzschichten 11,12 sind dann durch CVD-Beschichten jeweils mehrere elektrisch leitfähige DLC-Schichten erzeugt worden, die gemeinsam die jeweilige Funktionsschicht 13,14 bilden.

Bei einem dritten ebenfalls besonders für den Einsatz in einer Brennstoffzelle des PEM-Typs (max. Temperatur: 80 °C) geeigneten Ausführungsbeispiel besteht die Kernlage 10 der Bipolarplatten 5 jeweils wieder aus dem weichen und gut verformbaren, weniger als 0,06 Gew.-% Kohlenstoff enthaltenden Qualitätsstahl. Auf diese Kernlage 10 sind durch PVD-Bedampfung mit Gold die Korrosionsschutzschichten 11,12 gebildet worden. Die auf die Korrosionsschutzschichten 11,12 jeweils aufgebrachten Funktionsschichten 13,14 bestehen in diesem Fall jeweils aus einem durch CVD-Beschichten aufgebrachten, elektrisch leitfähigen Plasmapolymer.

### BEZUGSZEICHEN

- 1: Brennstoffzellen-Stack
- 2: Brennstoffzellen
- 3,4: Membran-Elektroden-Anordnungen "MEA"
- 5: Bipolarplatten
- 5,6: Kanäle
- 8,9: unverformte Oberflächenabschnitte der Bipolarplatten 5
- 10: aus Stahlwerkstoff bestehende Kernlage der Bipolarplatten 5
- 11,12: aus metallischem Werkstoff bestehende Korrosionsschutzschichten der Bipolarplatten 5
- 13,14: aus einem elektrisch leitfähigen, den Durchtritt von Metallionen behindernden Material bestehende Funktionsschichten der Bipolarplatten 5

- P: endseitige Platten des Brennstoffzellen-Stacks 1
- S: Spannschrauben des Brennstoffzellen-Stacks 1

## Patentansprüche

1. Bipolarplatte für eine Brennstoffzelle (2) mit einer aus einem Stahlwerkstoff bestehenden Kernlage (10), deren dem jeweiligen Elektrolyt-Träger der Brennstoffzelle (2) zugeordneten Oberflächen jeweils mit einer die Kernlage (10) vor Korrosion schützenden Korrosionsschutzlage (11,12) versehen sind, wobei die Korrosionsschutzlagen (11,12) jeweils aus einem Metallwerkstoff bestehen und sich beidseitig jeweils vollflächig über die Kernlage (10) erstrecken und wobei die Korrosionsschutzlagen (11,12) ihrerseits jeweils vollflächig mit einer elektrisch leitfähigen Funktionsschicht (13,14) beschichtet sind, welche für aus der Kernlage (10) und / oder den Korrosionsschutzlagen (11,12) austretende Metallionen im Wesentlichen vollständig undurchlässig ist **dadurch gekennzeichnet, dass** der Metallwerkstoff mindestens einer der Korrosionsschutzlagen (11,12) ein Stahlwerkstoff mit einer gegenüber dem Stahlwerkstoff der Kernlage (10) höheren Korrosionsbeständigkeit ist.

2. Bipolarplatte nach Anspruch 1, **dadurch gekennzeichnet, dass** der Metallwerkstoff mindestens einer der Korrosionsschutzlagen (11,12) ein Edelstahl ist.

3. Bipolarplatte nach einem der voranstehenden Ansprüche, **dadurch gekennzeichnet, dass** die Funktionsschicht (13,14) als amorphe C/H-Schichten oder als Plasmapolymer-Schicht ausgebildet ist.

4. Bipolarplatte nach einem der Ansprüche 1 bis 3, **dadurch gekennzeichnet, dass** die Funktionsschicht (13,14) aus einer leitfähigen anorganischen Verbindung gebildet ist.

5. Bipolarplatte nach Anspruch 4, **dadurch gekennzeichnet, dass** die anorganische Verbindung der Gruppe der Nitride und / oder Carbonitride, Oxide und / oder Oxynitride angehört.

6. Bipolarplatte nach einem der voranstehenden Ansprüche, **dadurch gekennzeichnet, dass** die Funktionsschicht (13,14) selbst mehrschichtig aufgebaut ist.

7. Bipolarplatte nach Anspruch 6, **dadurch gekennzeichnet**, **das**s sie eine erste gemäß Anspruch 4 und eine zweite gemäß Anspruch 5 gebildete Funktionsschicht (13,14) umfasst.

8. Bipolarplatte nach einem der Ansprüche 1 oder 2, **dadurch gekennzeichnet, dass** der Werkstoff der Funktionsschicht (13,14) der Gruppe "Au, Ni, Pd, Pt, Cu, Ag, Au" oder deren Legierungen angehört.

9. Bipolarplatte nach einem der voranstehenden Ansprüche, **dadurch gekennzeichnet, dass** die Dicke der Korrosionsschutzschicht (11,12) mindestens 10 nm beträgt.

10. Bipolarplatte nach einem der voranstehenden Ansprüche, **dadurch gekennzeichnet, dass** die Dicke der Funktionsschicht (13,14) mindestens 3 nm beträgt.

11. Bipolarplatte nach einem der voranstehenden Ansprüche, **dadurch gekennzeichnet, dass** die Kernlage (10) aus einem Edelstahl besteht.

12. Bipolarplatte nach einem der Ansprüche 1 bis 9, **dadurch gekennzeichnet, dass** die Kernlage (10) aus einem Qualitätsstahl hergestellt ist.

13. Brennstoffzellen-Stack mit mindestens zwei Elektrolyt-Trägern, zwischen denen eine gemäß einem der Ansprüche 1 bis 12 ausgebildete Bipolarplatte (5) angeordnet ist.

14. Brennstoffzelle nach Anspruch 12, **dadurch gekennzeichnet, dass** der Elektrolyt-Träger als protonenleitende Membran ausgebildet ist.

15. Brennstoffzelle nach Anspruch 12, **dadurch gekennzeichnet, dass** der Elektrolyt-Träger als hochkonzentrierte Phosphorsäure enthaltene Faserstruktur ausgebildet ist.

## Claims

1. Bipolar plate for a fuel cell (2) with a core layer (10) consisting of a steel material, the surfaces of said core layer, which are associated with the respective electrolyte carriers of the fuel cell, being provided in each case with a corrosion protection layer (11, 12), protecting the core layer (10) against corrosion, wherein the corrosion protection layers (11, 12) consist in each case of a metal material and extend in each case on both sides over the whole surface of the core layer (10), and wherein the corrosion protection layers (11, 12) are in turn coated in each case over the whole surface with an electrically conductive functional coating (13, 14), which is essentially entirely impermeable for the metal ions emerging from the core layer (10) and/or the corrosion protection layers (11, 12) **characterised in that** the metal material of at least one of the corrosion protection layers (11, 12) is a steel material with a higher corrosion resistance than the steel material of the core layer (10).

2. Bipolar plate according to claim 1, **characterised in that** the metal material of at least one of the corrosion protection layers (11, 12) is a special steel.

3. Bipolar plate according to claim 1 or 2, **characterised in that** the functional coating (13, 14) is formed as amorphous C/H coatings or as a plasma polymer coating.

4. Bipolar plate according to claim 1 or 2, **characterised in that** the functional coating (13, 14) is formed from a conductive inorganic compound.

5. Bipolar plate according to claim 4, **characterised in that** the inorganic compound belongs to the group of nitrides and/or carbonitrides, oxides and/or oxynitrides.

6. Bipolar plate according to claim 1 or 2, **characterised in that** the functional coating (13, 14) is itself made up of multiple layers.

7. Bipolar plate according to claim 6, **characterised in that** it comprises a first functional coating (13, 14) formed according to claim 4 and a second functional coating (13, 14) formed according to claim 5.

8. Bipolar plate according to claim 1 or 2, **characterised in that** the material of the functional coating (13, 14) belongs to the group "Au, Ni, Pd, Pt, Cu, Ag, Au" or their alloys.

9. Bipolar plate according to claim 1 or 2, **characterised in that** the thickness of the corrosion protection layer (11, 12) is at least 10 nm.

10. Bipolar plate according to claim 1 or 2, **characterised in that** the thickness of the functional coating (13, 14) is at least 3 nm.

11. Bipolar plate according to claim 1 or 2, **characterised in that** the core layer (10) consists of a special steel.

12. Bipolar plate according to claim 1 or 2, **characterised in that** the core layer (10) is produced from a quality steel.

13. Fuel cell stack with at least two electrolyte carriers, between which is arranged a bipolar plate (5) designed in accordance with claim 1 or 2.

14. Fuel cell according to claim 12, **characterised in that** the electrolyte carrier is designed as a proton conducting membrane.

15. Fuel cell according to claim 12, **characterised in that** the electrolyte carrier is designed as a fibre structure containing highly concentrated phosphoric acid.

## Revendications

1. Plaque bipolaire pour une pile à combustible (2) avec une couche d'âme (10) constituée d'un matériau d'acier, dont les surfaces associées à chacun des supports d'électrolyte de la pile à combustible (2) sont dotées d'une couche anticorrosion (11, 12) qui protège de la corrosion la couche d'âme (10), où les couches anticorrosion (11,12) sont constituées chacune d'un matériau métallique et s'étendent sur la totalité de la surface des deux faces de la couche d'âme (10) et où les couches anticorrosion (11, 12) sont elles-mêmes revêtues sur toute leur surface d'une couche fonctionnelle (13,14) électriquement conductrice qui est essentiellement complètement imperméable aux ions métalliques qui sortent de la couche d'âme (10) et/ou des couches anticorrosion (11, 12), **caractérisée en ce que** le matériau métallique d'au moins une des couches anticorrosion (11, 12) est un matériau d'acier avec une résistance accrue à la corrosion par rapport au matériau d'acier de la couche d'âme (10).

2. Plaque bipolaire selon la revendication 1, **caractérisée en ce que** le matériau métallique d'au moins une des couches anticorrosion (11, 12) est un acier inoxydable.

3. Plaque bipolaire selon l'une quelconque des revendications précédentes, **caractérisée en ce que** la couche fonctionnelle (13, 14) est conçue en tant que couches C/H amorphes ou en tant que couche polymère à plasma.

4. Plaque bipolaire selon l'une des revendications de 1 à 3, **caractérisée en ce que** la couche fonctionnelle (13, 14) est formée à partir d'un composé inorganique conducteur.

5. Plaque bipolaire selon la revendication 4, **caractérisée en ce que** le composé inorganique appartient au groupe constitué de nitrure et/ou carbonitrure, oxyde et/ou oxynitrure.

6. Plaque bipolaire selon l'une quelconque des revendications précédentes, **caractérisée en ce que** la couche fonctionnelle (13, 14) est formée elle-même en tant que structure multicouche.

7. Plaque bipolaire selon la revendication 6, **caractérisée en ce qu'**elle comporte une première couche fonctionnelle (13, 14) conformément à la revendication 4 et une deuxième couche fonctionnelle (13, 14) conformément à la revendication 5.

8. Plaque bipolaire selon l'une des revendications de 1 ou 2, **caractérisée en ce que** le matériau de la couche fonctionnelle (13, 14) appartient au groupe « Au, Ni, Pd, Pt, Cu, Ag, Au » ou à leurs alliages.

9. Plaque bipolaire selon l'une quelconque des revendications précédentes, **caractérisée en ce que** l'épaisseur de la couche anticorrosion (11, 12) est au moins de 10 nm.

10. Plaque bipolaire selon l'une quelconque des revendications précédentes, **caractérisée en ce que** l'épaisseur de la couche fonctionnelle (13, 14) est au moins de 3 nm.

11. Plaque bipolaire selon l'une quelconque des revendications précédentes, **caractérisée en ce que** la couche d'âme (10) se compose d'un acier inoxydable.

12. Plaque bipolaire selon l'une des revendications de 1 à 9, **caractérisée en ce que** la couche d'âme (10) est fabriquée en un acier de qualité.

13. Stack de piles à combustible avec au moins deux supports d'électrolyte entre lesquels est agencée une plaque bipolaire (5) conformément à l'une des revendications de 1 à 12.

14. Pile à combustible selon la revendication 12, **caractérisée en ce que** le support d'électrolyte est conçu en tant que membrane conductrice de protons.

15. Pile à combustible selon la revendication 12, **caractérisée en ce que** le support d'électrolyte est conçu en tant que structure fibreuse contenant de l'acide phosphorique fortement concentré.
